# EUROPEAN PATENT APPLICATION

(11) **EP 3 611 907 A1**
(43) Date of publication of application: **19.02.2020**
(21) Application number: 19191321.9
(22) Date of filing: 12.08.2019
(51) Int. Cl.: H04M 1/02, H04N 5/225, G06F 1/16

(54) **A CASE FOR A MOBILE ELECTRONIC DEVICE**

(30) Priority: 13.08.2018 GB 201813173
(71) Applicant: Tech 21 Licensing Limited, Twickenham, Middlesex TW1 3DY (GB)
(72) Inventor: THORPE, Benjamin, Uxbridge, UB8 2PH (GB); ROBERTS, Jason, Twickenham, Middlesex TW1 1QX (GB); HOWARD, Thomas, Twickenham Middlesex TW1 3DY (GB); WOMBWELL, Thomas, Twickenham Middlesex TW1 3DY (GB)
(74) Representative: Boult Wade Tennant LLP

(57) **Abstract**

A case for a mobile electronic device with a screen on one face and at least one camera on an opposite face. The case comprises a main body having a back wall (1) and upstanding sidewalls to define a cavity for the device. The back wall (1) has an aperture (10) which is aligned with the camera in the device. A recess (11) is formed in the side of the back wall opposite to the side forming the cavity. The recess extending laterally to the aperture and extending only partially through the depth of the back wall. A shutter (14) is snap fitted into the recess (11) and is slidably mounted with respect to the aperture. The shutter is slidable between an open position in which the aperture is uncovered and a closed position in which the aperture is covered. The surface of the shutter (14) facing the cavity is configured to wipe the or each camera as the shutter moves between the open and closed positions.

## Description

The present invention relates to a case for a mobile electronic device with a screen on one face and at least one camera on an opposite face.

Such cases are well known for devices such as smartphones and tablets.

Such devices are being provided with cameras of ever increasing quality to the extent that most people now use such a device in place of a conventional camera.

US2014/0333831 discloses a case for a mobile electronic device which has a slidable shutter which can slide into position in front of a camera lens. The case is provided with an outward bulge in order to accommodate a part of the shutter which is internal to the case. A through hole is provided in the bulge providing a slot in which the shutter slides. The shutter appears to be made of two parts which are positioned on either side of the through hole and which are fastened together by a screw in situ. There are a number of drawbacks of this design. Because the shutter slides along a through hole, when it is in a closed position, part of the shutter is exposed to the outside and can accumulate dirt. When the shutter slides to the open position, any dirt which has accumulated on this part of the shutter is immediately transferred into the internal part of the case where it can become trapped and can easily become transferred onto the camera lens. The two part of nature of the shutter which is screwed together provides a relatively complex assembly mechanism as the two parts would need to be assembled to one another in situ using a small screw.

CN206882207 discloses the idea of a slidable shutter. However, it does not disclose any details of how this is achieved in practice.

The present invention is directed to an improvement of such a case.

According to the present invention, there is provided a case according to claim 1.

The present invention provides a shutter which protects the camera from scratches and dirt during normal use. It also periodically wipes the camera to remove any dirt which has accumulated while the shutter is open. The design offers a number of benefits over US2014/0333831. The shutter is snap fitted into place. This removes the need for the two part shutter and fastener and therefore greatly simplifies the assembly process as well reducing the number of components required.

Further, the shutter is slidably mounted within a recess extending only partially through the depth of the back wall. This contrasts with US 2014/0333831 in which the shutter is slidable in a through hole. This significantly reduces the possibility of any dirt that has accumulated on the case in the closed position from being trapped within the case. Also, in US2014/0333831, the sliding part of the shutter is directly against the mobile device. This can cause the device to be scratched, particularly when dirt has entered as set out above.

This also ensures better support for the shutter when it is opened and closed as, it is supported by the material of the back wall in the bottom of the recess.

The shutter may project slightly from the recess. However, preferably, the shutter does not project out of the recess. This provides a low profile design and reduces the possibility of the shutter being opened accidentally. The recess may be formed such that it is entirely recessed into the back wall. However, preferably, the recess is at least partially defined by an upstanding rim extending around the perimeter of the recess. This allows a deeper recess to be formed without unduly increasing the thickness of the material of the back wall in regions away from the recess.

The shutter is preferably provided with one or more apertures. These can be positioned such that when the shutter is closed they are aligned with features in the mobile device in the vicinity of the camera such as a noise cancelling microphone or lights to allow them to operate when the shutter is closed.

The shutter may extend along the full height of the case. However, preferably, the shutter is confined to the upper half, and preferably the upper third of the case. As such, it is effectively confined only to the part of the case with the aperture for the camera. Preferably, the height of the shutter is substantially the same as the height of the aperture.

The surface of the shutter which faces the cavity is preferably provided with a fabric layer of a material which does not scratch the camera. This is preferably a microfibre layer.

An example of a case in accordance with the present invention will now be described with reference to the accompanying drawings in which:
Fig. 1A is a rear view of the case with the shutter closed;
Fig. 1B is a similar view with the shutter open;

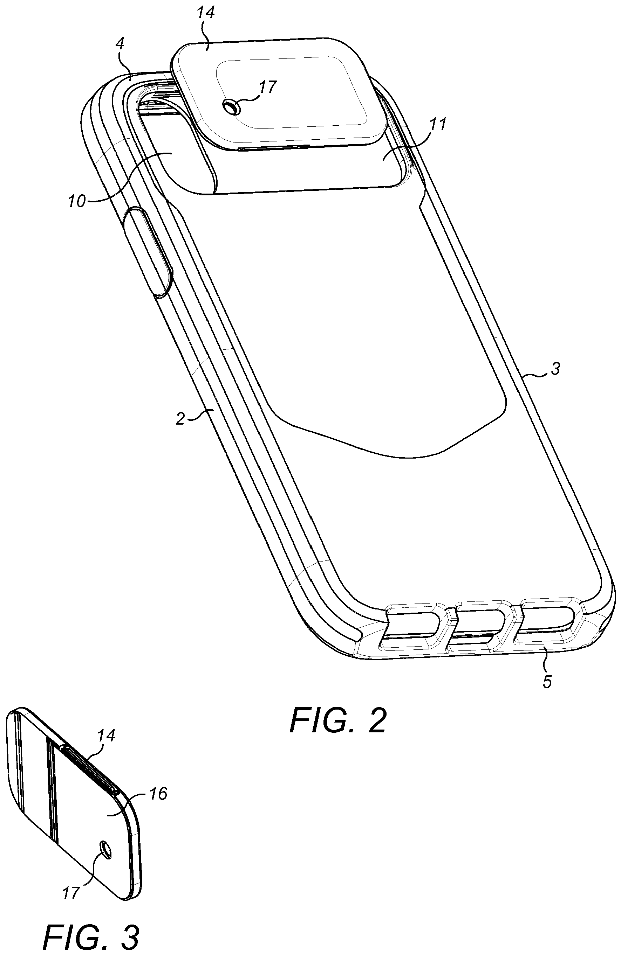

Fig. 2 is an exploded perspective view from the rear of the case showing the shutter disassembled from the case;
Fig. 3 is a perspective view showing the front face of the shutter;
Fig. 4 is a cross section through line IV-IV in Fig. 1A; and
Fig. 5 shows the detail of a part within the ring labelled V in Fig. 4.

Most elements of the case are conventional in that it has a back 1, sidewalls 2, 3, a top wall 4 and bottom wall 5.

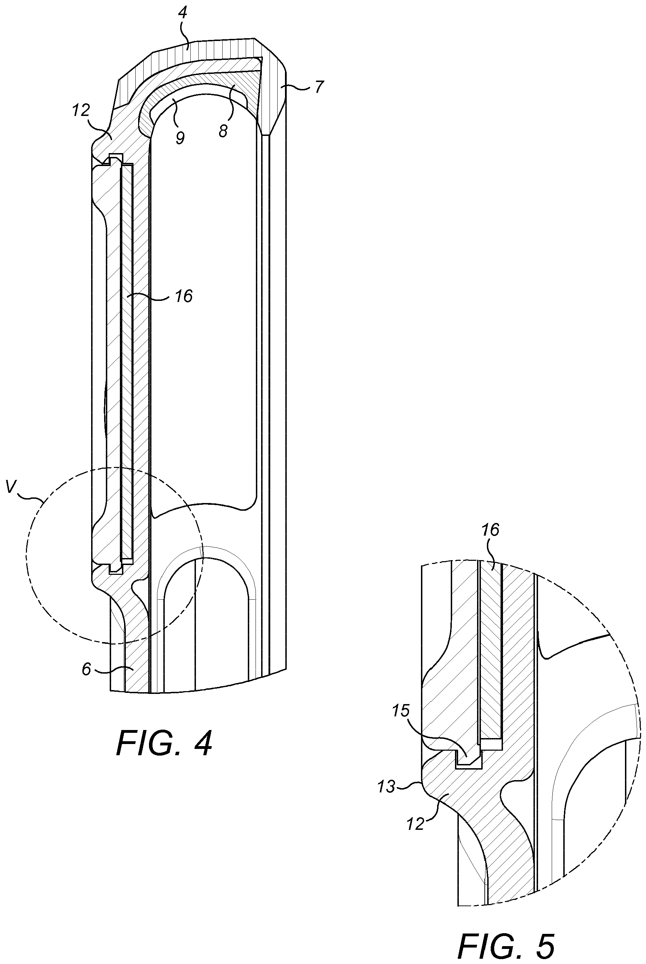

As shown in Fig. 4, the case is made of a number of materials. The main case is a polycarbonate 6. The sidewalls are surrounded with a layer of TPU 7 and are lined with a layer to TPE 8 provided with ribs 9. It should be noted, however, that the invention is applicable to cases of any material. The sidewalls are also provided with a number of apertures and interfaces in order to allow access to various feature of the device such as a speaker, charging ports and switches. This is well known in the art.

The back 1 is provided with an aperture 10 towards the top wall 4. This aperture 10 is configured to surround the or each camera on the mobile device. The aperture 10 shown in the figures has an elongate configuration as it is designed for a device with two cameras one above the other.

The aperture 10 is provided in a recess 11 extending across the full width of the case. The recess is surrounded by a rim 12 as shown in Figs. 4 and 5. The rim 12 is optional as the recess could simply be set into the back 1. The top and bottom faces of the recess 11 are provided with grooves 13. These are configured to receive a shutter 14.

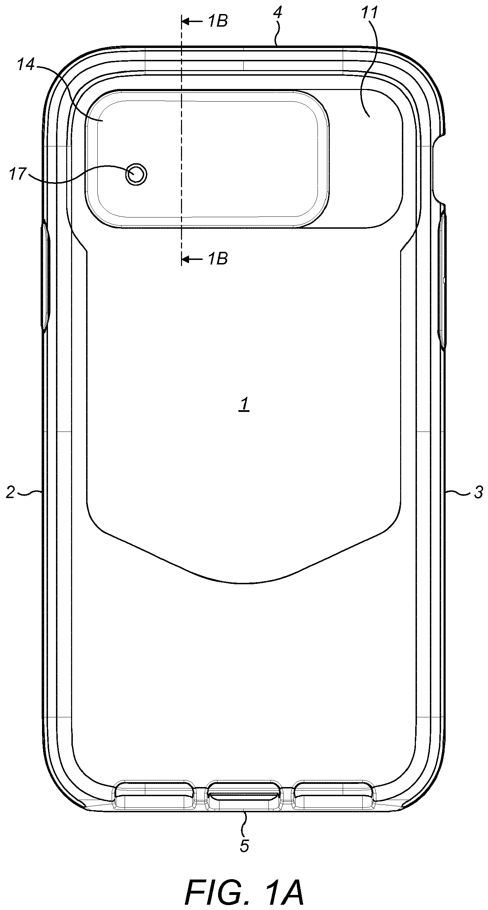

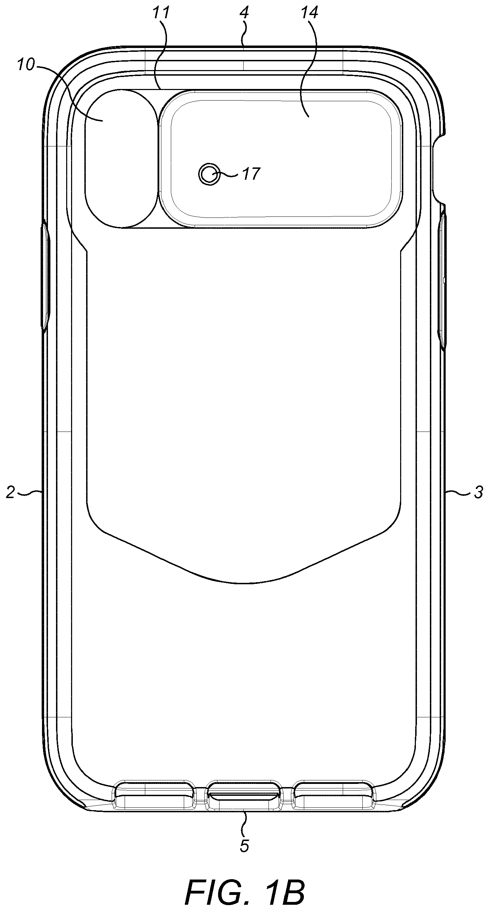

The shutter 14 has a pair of outwardly projecting lips 15 which allow the shutter 14 to be a snap fit into the recess 11 such that the lips 15 engage in the grooves 13 allowing the shutter 14 to slide across the recess between the position shown in Fig. 1A were the shutter 14 covers the aperture 10 and the position shown in Fig. 1B where the aperture 10 is exposed.

At least the part of the shutter 14 which will move over the aperture 10 is provided with a microfibre layer 16 which will wipe the camera as the shutter moves between the two above positions. Some devices have camera which protrudes slightly from the main body of the camera. The depth of the material of the wall 1 in the vicinity of the recess 11 can match the depth of protrusion of the camera, so that the microfibre layer 16 can wipe the camera which will be flush with the bottom of the recess 11. If the case is for a device with a camera which does not protrude, the depth of the wall 1 in the vicinity of the recess 11 should be as small as possible and/or the microfibre layer may be thicker and more resilient so that I can still wipe the camera.

The shutter 14 is also provided with a through hole 17 which is designed, in use, to align with a noise cancelling microphone on the mobile device. There may be additional apertures, or a sufficiently larger aperture that other features such a light on the mobile device may similarly be exposed when the shutter 14 is in the closed position shown in Fig. 1A.

In normal use, the shutter can be kept closed in the position shown in Fig. 1A in which the camera is protected from dirt and damage. When the user wishes to use the camera (or the light if no aperture is provided for that in the closed position), they slide the shutter 14 to the position shown in Fig. 1B thereby exposing the camera or cameras which can be used as normal. The shutter 14 can then be closed after use which will wipe any debris which has accumulated on the lens while it is being used.

## Claims

1. A case for a mobile electronic device with a screen on one face and at least one camera on an opposite face;
the case comprising a main body having a back wall and upstanding sidewalls to define a cavity for the device;
the back wall having an aperture which, in use, is aligned with the camera in the device;
a recess in the side of the back wall opposite to the side forming the cavity, the recess extending laterally to the aperture and extending only partially through the depth of the back wall;
a shutter snap fit into the recess and slidably mounted with respect to the aperture, the shutter being slidable between an open position in which the aperture is uncovered and a closed position in which the aperture is covered;
wherein the surface of the shutter facing the cavity is configured to wipe the or each camera as the shutter moves between the open and closed positions.

2. A case according to claim 1, wherein the shutter does not project out of the recess.

3. A case according to claim 1 or 2, wherein the recess is at least partially defined by an upstanding rim extending around the perimeter of the recess.

4. A case according to claim 1 to 3, wherein the shutter provided with one or more apertures.

5. A case according to any preceding claim, wherein the shutter is confined to the upper half, and preferably the upper third of the case.

6. A case according to any preceding claim, wherein the height of the shutter is substantially the same as the height of the aperture.

7. A case according to any preceding claim, wherein the surface of the shutter which faces the cavity is preferably provided with a fabric layer.

8. A case according to claim 7, wherein the fibre layer is a microfibre layer.
